Europäisches Patentamt

European Patent Office

Office européen des brevets

(19)

(11) Veröffentlichungsnummer: **0 293 717 B1**

# EUROPÄISCHE PATENTSCHRIFT

(12)

(45) Veröffentlichungstag der Patentschrift: **11.03.92**

(21) Anmeldenummer: **88108237.4**

(22) Anmeldetag: **24.05.88**

(51) Int. Cl.5: **B01J 20/18**, B01D 53/04

(54) **Zeolith A-Granulat für Sauerstoffanreicherung.**

(30) Priorität: **04.06.87 DE 3718673**

(43) Veröffentlichungstag der Anmeldung:
**07.12.88 Patentblatt 88/49**

(45) Bekanntmachung des Hinweises auf die
Patenterteilung:
**11.03.92 Patentblatt 92/11**

(84) Benannte Vertragsstaaten:
**AT BE DE ES FR GB IT NL SE**

(56) Entgegenhaltungen:
**EP-A- 0 170 026**
**DE-A- 3 312 876**
**DE-B- 1 161 869**
**US-A- 3 769 776**

(73) Patentinhaber: **BAYER AG**

**W-5090 Leverkusen 1 Bayerwerk(DE)**

(72) Erfinder: **Puppe, Lothar, Dr.**
**Am Weiher 10 A**
**W-5093 Burscheid(DE)**
Erfinder: **Reiss, Gerhard Dipl.-Ing.,**
**Ottweilerstrasse 20,**
**W-5090 Leverkusen(DE)**

**Beschreibung**

Die vorliegende Erfindung betrifft ein Verfahren zur Herstellung von Ca-haltigem Zeolith A-Granulat für die Anreicherung von Sauerstoff aus Luft, wobei das zeolithische Granulat $SiO_2$ als Bindemittel enthält und der Zeolithanteil keine $CO_3$-Strukturen an den eingetauschten Calciumkationen aufweist sowie die Verwendung des Ca-haltigen Zeolith A-Granulats.

Der spezifische Energiebedarf zur Sauerstofferzeugung durch Tieftemperatur-Luftzerlegung nimmt bei kleinen Kapazitäten stark zu. Sauerstoff kann in kleineren Mengen vorteilhaft durch adsorpive Luftzerlegungsverfahren gewonnen werden. Die erzielbaren Reinheiten sind in der Regel geringer als die des aus der Tieftemperatur-Zerlegung stammenden Sauerstoffs. Die adsorptiven Verfahren arbeiten bei Umgebungstemperatur, die Anlagen sind häufig transportabel und zeichnen sich durch kurze Anfahrzeiten und geringen Bedienungsaufwand aus (vgl. z.B. G. Reiß, Chem. Ind. XXXV/November, 1983).

In Prozessen zur adsorptiven Trennung von Luft in eine sauerstoff- und eine stickstoffreiche Phase wird die höhere Adsorptions-Affinität des Stickstoffs am Adsorbens gegenüber dem Sauerstoff ausgenutzt. Die $N_2/O_2$-Adsorptionsisothermen zeigen, daß z.B. Ca-Zeolith A mit 5Å Porenweite mehr Stickstoff als Sauerstoff adsorbiert. Der Unterschied zwischen Stickstoff und Sauerstoff ist jedoch nicht so groß, daß eine einwandfreie Trennung von Stickstoff und Sauerstoff der Luft möglich erscheint.

Die Wirksamkeit der adsorptiven Lufttrennung kann beachtlich erhöht werden, wenn man ein spezielles Adsorptionsverfahren - die Druckwechsel-Adsorption (DWA) - anwendet. Verfahren mit Druckwechseladsorption werden immer dann eingesetzt, wenn die zu entfernende Komponente des Rohproduktgases in höherer Konzentration, z.B. über 1 Vol-% vorliegt oder am Adsorbens ungenügend adsorbiert wird und dadurch bei einer thermischen Regeneration große Adsorptionseinheiten und hohe Regenerationsgasmengen notwendig werden. Allgemein erfolgt die adsorptive Trennung bei einem höheren Druck als die nach dem Adsorptionsschritt folgende Desorption der adsorbierten Komponenten.

In den meisten Fällen wird die Desorption durch Spülung des Adsorptionsmittels mit einem Teil des Produktgases unterstützt, z.B. bei der Gewinnung von Stickstoff aus Verbrennungsgasen oder Trocknung von Gasen.

Die Sauerstoffanreicherung von Luft nimmt gegenüber anderen DWA-Prozessen eine besondere Stellung ein, da neben dem Stickstoff auch Sauerstoff und Argon der Luft an den hierfür verwendeten Molekularsiebzeolithen adsorbiert werden. Es ist deshalb nicht möglich, nur den Stickstoff zu adsorbieren und den gesamten Sauerstoff der Rohproduktluft zu gewinnen. Da Argon ähnlich schwach wie Sauerstoff adsorbiert wird, erhält man im Falle der Sauerstoffanreicherung von Luft nur Sauerstoffreinheiten von 95 % mit einem 5 %igen Restanteil von Argon und Stickstoff.

Das Sauerstoff-Druckwechsel-Adsorptionsverfahren kann man in drei Schritte einteilen:

- Adsorption mit gleichzeitiger Gewinnung der nicht adsorbierten Phase, d.h. Sauerstoff
- Desorption der adsorbierten Phase, hier Stickstoff, Kohlendioxid und Wasser der Luft, bei einem Druck unterhalb des Adsorptionsdruckes, mit und ohne Spülgas
- Füllen des Adsorbers auf Adsorptionsdruck, wobei während dieses Füllvorgangs bereits eine Gastrennung erfolgen kann.

Alle Vorgänge laufen adiabatisch bei Umgebungstemperatur ab. Die Adsorption erfolgt bei höherem Druck, die Desorption bei Unterdruck ohne Spülgaszufuhr. Die Rückfüllung erreicht man mit produziertem Sauerstoff.

Dem Stand der Technik entsprechend, haben Sauerstoff-DWA-Anlagen folgende vier wesentliche Merkmale:

1. Adsorberzahl

In ihren Äußeren unterscheiden sich die Anlagen durch die Anzahl der Adsorber, wobei teilweise Gasspeicher angeschlossen sind. Meist nimmt mit steigender Anzahl der Adsorber der spezifische Energieverbrauch ab.

2. Druckbereich und Zykluszeit

Wesentliche Unterschiede gibt es in den Druckwechselbereichen mit folgenden Varianten:
- Adsorption bei Normaldruck
  Desorption bei Unterdruck zwischen 50-250 mbar
- Adsorption bei Überdruck von 2-4 bar (abs)
  Desorption bei Umgebungsdruck

- Adsorption bei 2-4 bar (abs)
  Desorption bei Unterdruck zwischen 50-500 mbar.

Für Normaldruck-Anlagen liegt die Zykluszeit pro Adsorber bei 0,5 bis 1,5 min, für Systeme mit Überdruck bei 1 bis 3 min.

3. Teilschritt

Ein Schlüssel für die Wirksamkeit der $O_2$-DWA-Prozesse ist der Füllschritt nach der Desorption. Wichtig ist, daß vor dem Adsorptionsschritt an der Adsorptionsaustrittsseite möglichst wenig Stickstoff adsorbiert ist, da dieser voradsorbierte Stickstoff die $O_2$-Produktqualität erheblich reduzieren kann. Dies wird durch den Füllschritt oder eine Spülung mit Produktsauerstoff beeinflußt. Füllschritte können wie folgt unterschieden werden:
- Füllung nur mit Produkt (Gegenstrom)
- Füllung mit Produkt (Gegenstrom) und mit Luft (Gleichstrom, zeitlich versetzt oder gleichzeitig)
- Füllung mit Luft (Gleichstrom, allerdings nur, wenn die Adsorptionsaustrittsseite vorher mit $O_2$-Produkt gespült wurde)

4. Vortrocknung

Die Vortrocknung der Luft muß einwandfrei sein, da eine im Adsorber vorrückende $CO_2/H_2O$-Front die $N_2/O_2$-Trennung zunichte macht.

Die Vorreinigung und $N_2/O_2$-Trennung erfolgt im gleichen Adsorber, wobei eine Schicht geeigneter Zeolithe oder anderer Trocknungsmittel and der Lufteintrittsseite angebracht wird.

Wie bereits erwähnt, werden für $N_2/O_2$-Trennung nach dem DWA-Verfahren zeolithische Molekularsiebe als Adsorbens eingesetzt. Der Zeolith selbst kann in verschiedenster Weise mit seinen Eigenschaften die Größe und den Energiebedarf von $O_2$-DWA-Anlagen beeinflussen. Zwei wesentliche Anforderungen sind einerseits eine hohe Stickstoffadsorption mit geringer Sauerstoffadsorption und eine gute Diffusion bei der Adsorption und Desorption.

Um eine hohe Stickstoffadsorption zu erreichen, wird üblicherwiese calciumausgetauschter Zeolith A für DWA-Anlagen eingesetzt. Eine besondere Bedeutung kommt hierbei dem Austauschgrad für $CaO/Mol\ Al_2O_3$ im Zeolith A zu. Der Austauschgrad im Zeolith kann von 0 bis 1.0 $Mol\ CaO/Mol\ Al_2O_3$ reichen. Mit zunehmendem Austauschgrad für CaO nimmt die $N_2$-Adsorption im Zeolith zu. Üblicherweise beträgt der Austauschgrad 0,4 bis 1 $Mol\ CaO/Mol\ Al_2O_3$.

Für den Einsatz in technischen Adsorbern wird der Zeolith in granulierter Form verwendet. Für die Herstellung von Granulaten sind verschiedene Verfahren nach dem Stand der Technik bekannt. Man kann das Ca-ausgetauschte Zeolith A-Pulver mit tonmineralischen Bindemitteln, wie z.B. Attapulgite, Bentonite, Sepiolithe, Kaolinite, Ballclays, Fireclays o.ä. in Gewichtsmengen von 10 bis 30 %, bevorzugt 15 bis 25 %, vermischen und nach der erforderlichen Flüssigkeitszugabe auf den geeigneten Granuliereinrichtungen wie z.B. Walzengranulatoren, Extrudern, Mischgranulatoren, Ringkollerpressen, Strangpressen o.ä. zu Formkörpern verpressen. Ebenso sind Tellergranulatoren oder Granuliertrommeln einsetzbar.

Weiterhin ist es möglich, andere Bindemittel, wie z.B. $Al_2O_3$, $SiO_2$ o.ä. einzusetzen.

Die Granulierung zu Kugeln mit $SiO_2$ als Bindemittel erfolgt vorzugsweise nach einem Verfahren wie es in der DE-A 3 401 485 beschrieben ist.

Man erhält hierbei ein $SiO_2$-gebundenes Granulat, das eine hohe Makroporosität aufweist, was eine Voraussetzung für den Einsatz des Granulats in den DWA-Prozeß ist.

Aus der US-A 3,769,776 ist ein Verfahren zur Herstellung und Aktivierung von Molekularsieben auf Basis von Chabasit bekannt. Das so hergestellte Granulat wird für die chromatographische Auftrennung von Inertgasen eingesetzt.

Die DE-A 3,312,876 Anmeldung offenbart ein Verfahren zur Herstellung von Zeolithgranulaten mit Natriumsilikatlösung als Bindemittel sowie entsprechend hergestellte Granulate.

Die EP-A 170 026 hat ein Verfahren zur Erhöhung der Bruchfertigkeit von $SiO_2$-gebundenen Granulaten durch Ionenaustausch mit zweiwertigen Kationen zum Gegenstand. Die Aktivierung der Granulate erfolgt dabei nach dem bekannten Stand der Technik.

Neben der Höhe des Austauschgrades für CaO ist die Art der Aktivierung bzw. die Kristallinität des zeolithischen Materials sowie die Zugänglichkeit der innerkristallinen Adsorptionsstellen von erheblicher Bedeutung für eine gute Sauerstoffanreicherung.

Gegenstand der vorliegenden Erfindung ist nun ein Verfahren zur Herstellung von $SiO_2$-gebundenem, im wesentlichen carbonatfreien, calciumhaltigen Zeolith A-Granulat, bei dem der Calciumanteil 0,4 bis 1 Mol

EP 0 293 717 B1

CaO/Mol $Al_2O_3$ beträgt, wobei man das Granulat in einer $CO_2$-freien Atmosphäre bei Temperaturen von 350°C bis 700°C aktiviert.

Vorzugsweise beträgt der CaO-Anteil mehr als 0,5 Mol CaO/Mol $Al_2O_3$.

Überraschenderweise wurde gefunden, daß ein erfindungsgemäßer Ca-ausgetauschter Zeolith A, der als Bindemittel $SiO_2$ enthält, nach der Aktivierung in einer $CO_2$-freien Atmosphäre eine besonders hohe Leistung für die Sauerstoff-Anreicherung nach dem DWA-Verfahren aufweist. Als Vergleich zu diesem erfindungsgemäßen Material sind in der Tabelle 1 die relativen $O_2$-Produktraten pro kg Molekularsieb von verschiedenen für die Sauerstoffanreicherung einsetzbaren Zeolith A-Molekularsiebgranulaten aufgeführt.

Hierbei erweist sich die Überlegenheit des erfindungsgemäßen Granulats dadurch, daß gegenüber mit Tonmineralien gebundenen Zeolithgranulat eine 15 % bessere Sauerstoffproduktrate pro kg Molekularsieb erzielt werden kann.

Das erfindungsgemäße Zeolith A-Granulat wird wie folgt hergestellt: Die Granulierung von Zeolith A-Pulver wird mit $SiO_2$ als Bindemittel nach dem Verfahren der DE-A 3 401 485 auf einem Granulierteller vorgenommen. Anschließend wird das Granulat Ca-ausgetauscht, getrocknet und aktiviert. Die Aktivierung erfolgt in $CO_2$-freier Gasatmosphäre oberhalb von 350°C bevorzugt 400-700°C.

Anschließend kann das erfindungsgemäße Granulat in das im Beispiel 2 beschriebene DWA-SauerstoffanreicherungsVerfahren eingesetzt werden.

Tabelle

| Ermittlung der Menge von Ca-ausgetauschten Zeolith A-Molekularsiebgranulaten, Austauschgrad: 0,75 $CaO/Al_2O_3$ | | | |
|---|---|---|---|
| Beispiel | Bindemittel Anteil: 15 % | Aktivierungsatmosphäre | Relative Sauerstoffproduktrate |
| 1 | $SiO_2$ | $CO_2$-haltig | 100 % |
| 3 | $SiO_2$ | $CO_2$-frei | 115 % |
| 4 | Bentonit | $CO_2$-haltig | 85 % |
| 5 | Bentonit | $CO_2$-frei | 100 % |

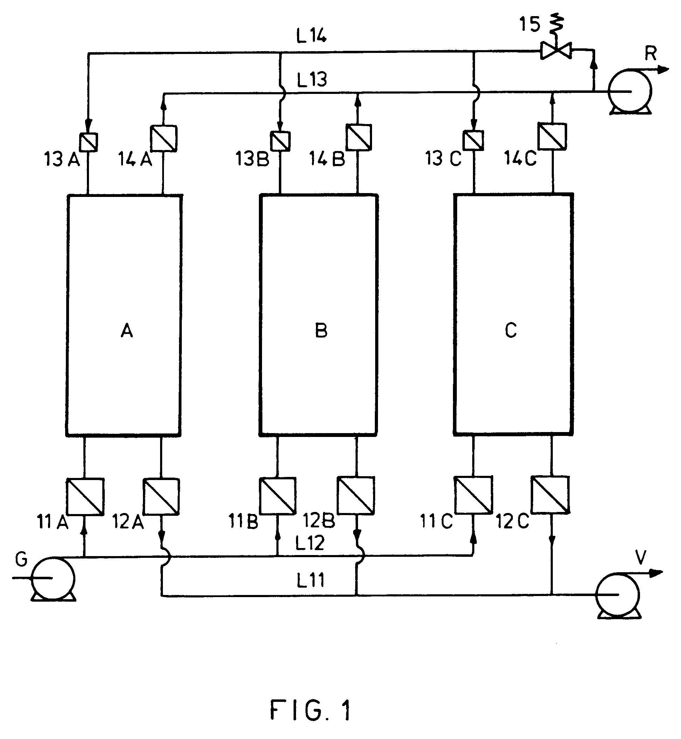

Ein übliches Verfahren zur Erzeugung von mit Sauerstoff angereicherter Luft mit Molekularsieb-Zeolithen ist in Fig. 1 dargestellt (AIChE Symp. 134, Vol. 69, 1973, S.7).

An der untersten Seite der Adsorber befinden sich Ventile (11) bzw. Klappen für den Rohgaseintritt und Ventile (12) für den Austritt des desorbierten Gases. Das Adsorptionsmittelbett besteht am unteren Ende aus einer Schutzschicht, wie Kieselgel, zur Vortrocknung des eingetretenen Rohgases, darüber die Hauptzonen mit Adsorbens zur Trennung des Gasstromes. Am oberen Ende der Adsorber befinden sich Ventile (14) für die Abgabe von desorptiv behandeltem Gas, über weitere Ventile (13) werden die Adsorber wieder auf Adsorptionsdruck gefüllt. Mit Ventil 15 kann diese Füllung so gesteuert werden, daß ein konstanter Druckanstieg oder eine konstante Füllgasmenge erreicht wird. Das Gebläse (G) der eintretenden Luft überbrückt den Druckverlust bei der Adsorption, der Adsorptionsdruck beträgt ca.1 bar abs.

Gegenstand dieser Erfindung ist somit auch die Verwendung des erfindungsgemäßen $SiO_2$-gebundenen Zeolith A-Granulats bei der Sauerstoffgewinnung nach dem Druckwechseladsorptionsverfahren.

In den nachfolgenden Beispielen wird die Herstellung der erfindungsgemäßen Granulate sowie der Einsatz dieser Granulate in einem DWA-Verfahren zur Anreicherung von Sauerstoff aus Luft beschrieben.

Beispiele

Beispiel 1 Herstellung des Granulats

30 kg Natriumzeolith A mit einem Wassergehalt (Glühverlust) von 10 Gew.-% wurden unter Zugabe von 15 l 30 %igem Kieselsol eines BET-Wertes von ca. 300 $m^2/g$ im Intensivmischer zu einem Granulat von ca. 0,1 bis 0,8 mm Korngröße verarbeitet. Dieses Vorgranulat gab man in einen Granulierteller.

Dann wurde feinpulvriger Zeolith A fortlaufend dosiert in den rotierenden Teller eingetragen, wobei gleichzeitig 30 %iges Kieselsäuresol an einer anderen Stelle des Tellers auf das sich bewegende Granulat aufgesprüht wurde. Dem Kieselsäuresol wurde über eine Injektionsvorrichtung ein Wasserglasstrom beigemischt, so daß ein Verhältnis von Sol zu Wasserglas von 10:1 eingestellt wurde. Es wurde ein kugelförmiges Granulat von 2 bis 3 mm erhalten. Das feuchte Granulat wurde bei 80°C getrocknet, gesiebt, einem

4

Ca-Austausch unterzogen und anschließend in einem Schachtofen unter Durchströmen von Luft auf 400°C erhitzt. Das Material weist eine Sauerstoffanreicherung auf, die mit 100 % gleichgesetzt wird (siehe Beispiel 2).

FT-IR-Messungen zeigen, daß dieses Material Carbonat-Strukturen aufweist.

Messung der Sauerstoffanreicherung nach dem Verfahren Adsorption Normaldruck/Desorption Unterdruck.

Um den Vorteil der erfindungsgemäßen Granulate zu zeigen, wird anhand der nachfolgenden Beispiele das Verfahren der Sauerstoffanreicherung beschrieben, wie man es z.B. in der DOS 3 413 895 findet. In dieses Verfahren der Sauerstoffanreicherung werden Granulate nach dem stand der Technik und die erfindungsgemäßen Granulate eingesetzt.

Beispiel 2 Sauerstoffanreicherung mit dem Granulat aus Beispiel 1

Es wurde eine DWA-Anlage entsprechend Fig. 1 verwendet, die Gesamtschütthöhe der Adsorber betrug 2500 mm, je Adsorber waren am Boden 900 kg Kieselgel und darüber 5500 kg Molekularsieb-Zeolith 5 A in der Körnung 2-5 mm eingefüllt. Es wurde eine Rotationsvakuumpumpe eingesetzt. Mit dem Kompressor (R) konnte sauerstoffangereicherte Luft aus den Adsorbern A, B, C abgezogen und auf 1.1 bis 1.5 bar (abs) verdichtet werden.

Mittels der drei Adsorber konnte ein kontinuierlicher Prozeßablauf mit kontinuierlicher Gasabnahme am Kompressor (R) erreicht werden. Es wurde folgender Zeitablauf gewählt:

Schritt 1 0 bis 70 Sekunden

Umgebungsluft von 25°C strömt über Gebläse (G), Leitung L 12, Ventil 11 A bei einem konstanten Druck von etwa 1 bar (abs) in Adsorber A, sauerstoffangereicherte Luft wird von Gebläse R über Ventil 14 A, Leitung L 13 als Produkt abgezogen. Die Ventile 12 a, 13 A sind geschlossen. Gleichzeitig strömt ein Teil der sauerstoffangereicherten Luft aus Leitung L 13 über das Gasmengensteuerbare Ventil 15, Leitung L 14, Ventil 13 B in Adsorber B, wobei Ventile 14 B, 11 B und 12 B geschlossen sind. Dadurch wird Adsorber B, der vor diesem Schritt der Desorption unterworfen war, d.h. evakuiert wurde, mit sauerstoffangereicherter Luft wieder auf Adsorptionsdruck aufgefüllt. Zur Vermeidung von Unterdruck in Adsorber A, z.B. infolge zu schneller Produktaufnahme (Füllgas) aus Leitung L 13, wird Ventil 15 so geregelt, daß ein konstanter Produktfluß (ausgedrückt in $Nm^3/h$) über Leitung L 14, Ventil B in Adsorber E strömt.

Während des Adsorptionsschrittes in Adsorber A und während des Füllschrittes in Adsorber B wird Adsorber C mittels der Vakuumpumpe V über Ventil 12 C, Leitung L 11 evakuiert, d.h. Ventile 11 C, 13 C, 14 C des Adsorbers C sind geschlossen. Nach einer Desorptionsdauer bzw. Abpumpzeit von 70 Sekunden zeigt ein Hg-Manometer, das sich zwischen Ventile 12 C und dem Adsorber C befindet, einen Enddruck von 70 mbar an.

Schritt 2 70 bis 140 Sekunden

Adsorber A wird über Ventil 12 A, Leitung L 11, Vakuumpumpe (V) auf einen Enddruck von 70 mbar abgesaugt, wobei Ventile 11 A, 13 A, 14 A geschlossen sind. Adsorber B ist mit Luft über Gebläse (G), Leitung L 12, Ventil 11 B beaufschlagt, Produktgas wird von Kompressor (R) aus Adsorber B über Ventil 14 B, Leitung L 13 abgezogen. Die Ventile 12 B, 13 B sind geschlossen. Adsorber C wird von 70 mbar auf einen Adsorptionsdruck von etwa 1 bar (abs) aufgefüllt, wobei sauerstoffangereicherte Luft aus Leitung L 13 über das gasmengengeregelte Ventil 15, Leitung L 14, Ventil 13 C in den Absorber C gelangt. Hierbei sind Ventile 11 C, 12 C, 14 C des Adsorbers C geschlossen.

Schritt 3 140 bis 210 Sekunden

Adsorber A wird mit sauerstoffangereicherter Luft aus Leitung L 13 über Ventil 15, Leitung L 14, Ventil 13 A von seinem minimalen Desorptionsdruck (70 mbar) auf Adsorptionsdruck 1 bar (abs) gebracht, wozu Ventile 11 A, 12 A und 14 A geschlossen sind.

Adsorber B wird mittels der Vakuumpumpe (V) über Leitung L 11, Ventil 12 B von Adsorptionsdruck auf einen Enddruck von 70 mbar evakuiert, Ventil 11 B, 13 B, 14 B sind hierbei geschlossen.

Adsorber C liefert sauerstoffangereicherte Luft, d.h. Umgebungsluft gelangt über Gebläse (G), Leitung L 12, Ventil 11 C in Adsorber C, Produktgas wird vom Kompressor (R) über Ventil 14 C, Leitung L 13 abgezogen, wobei Ventile 12 C, 13 C geschlossen sind.

Nach 210 Sekunden Taktdauer wiederholt sich der Prozeß, d.h. Adsorber A steht auf Adsorption, Adsorber B wird gefüllt, Adsorber C evakuiert.

Innerhalb von 0,5 bis 1 Stunde nach Beginn des Versuchs konnte über Kompressor (R) ein Produktstrom konstanter Sauerstoffkonzentration gewonnen werden.

Die bei diesem Versuch gewonnene Produktmenge an sauerstoffangereicherter Luft mit einem $O_2$-Gehalt von 93 % ist im Vergleich zu den verschiedenen Zeolithgranulatproben in Tabelle 1 dargestellt und wird gleich 100 % gesetzt.

Beispiel 3 Erfindungsgemäßes Granulat

Die Herstellung des $SiO_2$-gebundenen Granulats erfolgte entsprechend dem Vergleichsbeispiel 1. Die Calcinierung wurde jedoch unter Durchströmen von $CO_2$-freiem Gas in einem Schachtofen bei 400°C vorgenommen. FT-IR-Messungen zeigten, daß dieses Material keine bzw. sehr wenige Carbonat-Strukturen aufwies.

Im Vergleich zum Granulat aus Beispiel 1 zeigte dieses Granulat eine um 15 % höhere Sauerstoffanreicherungsrate.

Die Sauerstoffanreicherung wurde entsprechend dem im Beispiel 2 beschriebenen Verfahren durchgeführt.

Beispiel 4 Vergleichsbeispiel, tongebundenes Granulat

Die Aktivierung eines tongebundenen Granulat erfolgte im Luftstrom. Die Sauerstoffanreicherung wurde entsprechend dem im Beispiel 2 beschriebenen Verfahren durchgeführt. Im Vergleich zum Granulat aus Beispiel 1 zeigte dieses Granulat eine um 15 % niedrigere Sauerstoffanreicherungsrate.

Beispiel 5 Vergleichsbeispiel, tongebundenes Granulat

Die Aktivierung eines tongebundenen Granulats erfolgte in $CO_2$-freiem Gastrom. Die Sauerstoffanreicherung wurde entsprechend dem in Beispiel 2 beschriebenen Verfahren durchgeführt. Im Vergleich zum erfindungsgemäßen Granulat aus Beispiel 3 zeigte dieses Granulat eine um 15 % niedrigere Sauerstoffanreicherungsrate.

**Patentansprüche**

1.  Verfahren zur Herstellung von $SiO_2$-gebundenem, im wesentlichen carbonatfreien, calciumhaltigen Zeolith A-Granulat, bei dem der Calciumanteil 0,4 bis 1 Mol CaO/Mol $Al_2O_3$ beträgt, dadurch gekennzeichnet, daß man das Granulat in einer $CO_2$-freien Atmosphäre bei Temperaturen von 350°C bis 700°C aktiviert.

2.  Verwendung von $SiO_2$-gebundenem Zeolith A-Granulat gemäß Anspruch 1 bei der Sauerstoffgewinnung nach dem Druckwechseladsorptionverfahren.

**Claims**

1.  A process for the production of $SiO_2$-bound, substantially carbonate-free, calcium-containing zeolite A granules in which the calcium content is from 0.4 to 1 mol CaO/mol $Al_2O_3$, characterized in that the granules are activated in a $CO_2$-free atmosphere at temperatures of 350°C to 700°C.

2.  The use of $SiO_2$-bound granules according to claim 1 in the production of oxygen by the pressure change adsorption process.

**Revendications**

1.  Procédé pour la préparation d'un produit granulé de zéolithe A lié par du $SiO_2$ contenant du calcium, essentiellement exempt de carbonate, dans lequel la fraction en calcium s'élève de 0,4 à 1 mole de CaO/mole de $Al_2O_3$ caractérisé en ce qu'on active le granulé dans une atmosphère exempte de $CO_2$ à des températures de 350°C à 700°C.

2. Utilisation du produit granulé de zéolithe A lié par du $SiO_2$ selon la revendication 1, dans la production d'oxygène d'après le procédé d'adsorption par variation de pression.

FIG. 1